Europäisches Patentamt

European Patent Office

Office européen des brevets

(19)

(11) Veröffentlichungsnummer: **0 151 279**
**B1**

(12) **EUROPÄISCHE PATENTSCHRIFT**

(45) Veröffentlichungstag der Patentschrift:
13.07.88

(51) Int. Cl.⁴: **H 04 Q 7/04,** H 04 B 1/66

(21) Anmeldenummer: **84115458.6**

(22) Anmeldetag: **14.12.84**

(54) Empfänger für ein digitales Zellenfunksystem mit Zeitmultiplex.

(30) Priorität: **03.02.84 DE 3403716**

(43) Veröffentlichungstag der Anmeldung:
**14.08.85 Patentblatt 85/33**

(45) Bekanntmachung des Hinweises auf die Patenterteilung:
**13.07.88 Patentblatt 88/28**

(84) Benannte Vertragsstaaten:
**DE FR GB IT**

(56) Entgegenhaltungen:
EP - A - 0 064 686
EP - A - 0 151 280
EP - A - 0 151 281
DE - A - 3 129 911

**1982 CONFERENCE PROCEEDINGS: FIRST ANNUAL PHOENIX CONFERENCE ON COMPUTERS AND COMMUNICATIONS, 9-12. Mai, 1982, Hilton Hotel, PHOENIX, ARIZONA, (US), S. 230-234, IEEE, NEW YORK, (US), L.M. CARSON: "A microprocessor-based spread spectrum processor for low signal-to-noise ratios"**

(73) Patentinhaber: **Licentia Patent-Verwaltungs-GmbH, Theodor-Stern-Kai 1, D-6000 Frankfurt/Main 70 (DE)**

(72) Erfinder: **Schaller, Wolfgang, Dr.-Ing., Am Roten Berg 51, D-7900 Ulm (DE)**

(74) Vertreter: **Schulze, Harald Rudolf, Dipl.-Ing. et al, Licentia Patent-Verwaltungs-GmbH Theodor-Stern-Kai 1, D-6000 Frankfurt/Main 70 (DE)**

ACTORUM AG

## Beschreibung

Die Erfindung betrifft einen Empfänger für ein digitales Zellenfunksystem nach dem Oberbegriff des Anspruchs 1, wie aus der DE-A 3 118 018 bekannt.

Zellenfunksysteme, z.B. für den öffentlichen beweglichen Landfunk, benötigen für die Funkübertragung zwischen den mobilen Teilnehmern und den Feststationen je nach Verkehrsaufkommen eine grössere Zahl von Kanälen pro Feststation. Bei den herkömmlichen realisierten Verfahren sind dies Frequenzkanäle (FDMA). In der DE-A 3 118 018 ist ein Zeitmultiplexverfahren (TDMA) vorgeschlagen, so dass an die Stelle der Frequenzkanäle Zeitkanäle (Zeitschlitze) zur Übertragung der verschiedenen gleichzeitigen Gespräche treten. Die Übertragung im Zeitschlitz erfolgt digital mit einem orthogonalen Zeichensatz $\{c_i(t)\}$. Damit ist eine Spektrumsverbreiterung verbunden (Spreizung).

Diese ermöglicht es, mit Hilfe von Empfangskorrelatoren für die einzelnen Zeichen des Zeichensatzes eine zeitliche Auflösung der einzelnen Wellen im Mehrwegempfangsfeld zu erreichen und dadurch die Intersymbolinterferenz trotz hoher Übertragungsrate zu vermeiden. Weitere Einzelheiten können der oben zitierten Offenlegungsschrift entnommen werden.

In den Patentanmeldungen EP-A-O 151 280 und EP-A-O 151 281 der Anmelderin, veröffentlicht am 14.08.1985, werden Weiterentwicklungen des bekannten Zellenfunksystems beschrieben. So wird in EP-A-O 151 281 vorgeschlagen, für den Funkverkehr ein Restseitenbandverfahren mit unterdrücktem Träger in Verbindung mit einer PSK-Modulation anzuwenden. Die Funkempfänger weisen einen analogen Quadratureingangsteil auf, an welchen sich ein digitaler Prozessor zur komplexen Signalverarbeitung anschliesst. Im Eingangsteil wird das Empfangssignal mit einer Hilfsfrequenz $f_H = f_o - B_6/2$ umgesetzt, wobei $f_o$ der unterdrückte Träger und $B_6$ die 6dB-Bandbreite des Empfängers ist. Eine Verschiebung in die Einseitenbandlage erfolgt erst im digitalen Teil.

Weiter wird in EP-A-O 151 280 vorgeschlagen, zur Auflösung des Mehrwegempfangsfeldes die empfangenen Signale mit der vollständig ermittelten Kanalstossantwort zu korrelieren.

Aufgabe der Erfindung ist es, einen Empfänger der eingangs genannten Art anzugeben, der integrationsfreundlich und wenig aufwendig ist.

Die Erfindung ist im Patentanspruch 1 gekennzeichnet. Die weiteren Ansprüche beinhalten vorteilhafte Weiterbildungen bzw. Ausführungen der Erfindung.

Die Erfindung wird im folgenden anhand der Figuren in bevorzugter Ausführung und Weiterbildung näher erläutert.

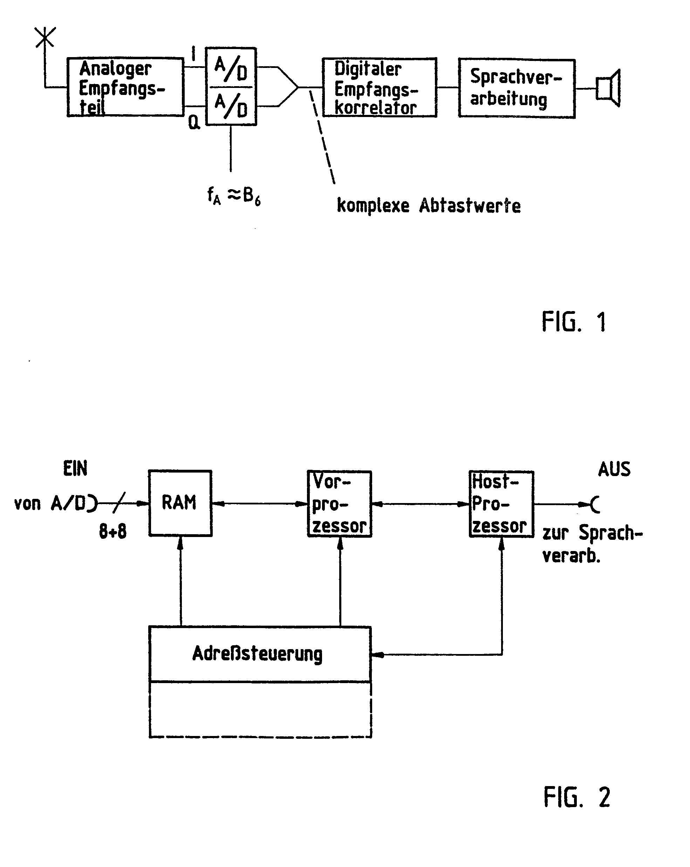

Fig. 1 zeigt ein Blockschaltbild des gesamten Empfängers. Der analoge Eingangsteil ist als Quadraturempfänger aufgebaut. Daran schliessen sich Analog/Digital-Wandler (A/D) für beide Kanäle an. Der folgende digitale Empfangskorrelator zur Verarbeitung der komplexen Abtastwerte ist Schwerpunkt der vorliegenden Erfindung. Die Sprachverarbeitung als letzte Stufe ist im Prinzip bekannt und wird nicht weiter erläutert.

Fig. 2 zeigt den digitalen Empfangskorrelator mehr im Detail. Ein RAM-Puffer nimmt die Abtastwerte eines Zeitschlitzes auf. Während der Zeitdauer eines Rahmens (= Summe der Kanäle, bzw. die Zeit nach der ein bestimmter Zeitschlitz wiederkehrt) werden diese Werte von einem Korrelatorbaustein unter der Regie eines Host-Prozessors verarbeitet. Der Host-Prozessor ist ein speicherprogrammierter Signalprozessor als Standardschaltkreis. Der Korrelatorbaustein übernimmt als Vorprozessor die grosse Masse der Operationen, für deren schnellen Durchsatz er fest verdrahtet ist (Spezialschaltkreis). Die gesamte verbleibende Peripherie einschliesslich der Adresssteuerung von RAM und Vorprozessor wird in einer zweiten Kundenschaltung zusammen mit der Sendesignalaufbereitung integriert.

RAM, Vorprozessor und Host-Prozessor sind untereinander durch bidirektionelle Datenbusse verbunden. Sämtliche für die verschiedenen Korrelationsvorgänge benötigten Referenzsignale, wie Synchronisationspräambeln, Zeichencodes usw. sind im Host-Prozessor fest abgespeichert und werden zu Beginn eines Rechenvorganges in einen Speicher der Vorprozessors geladen. Dieser Speicher ist in Unterscheidung zum RAM (-Puffer) als Vorprozessor-RAM bezeichnet.

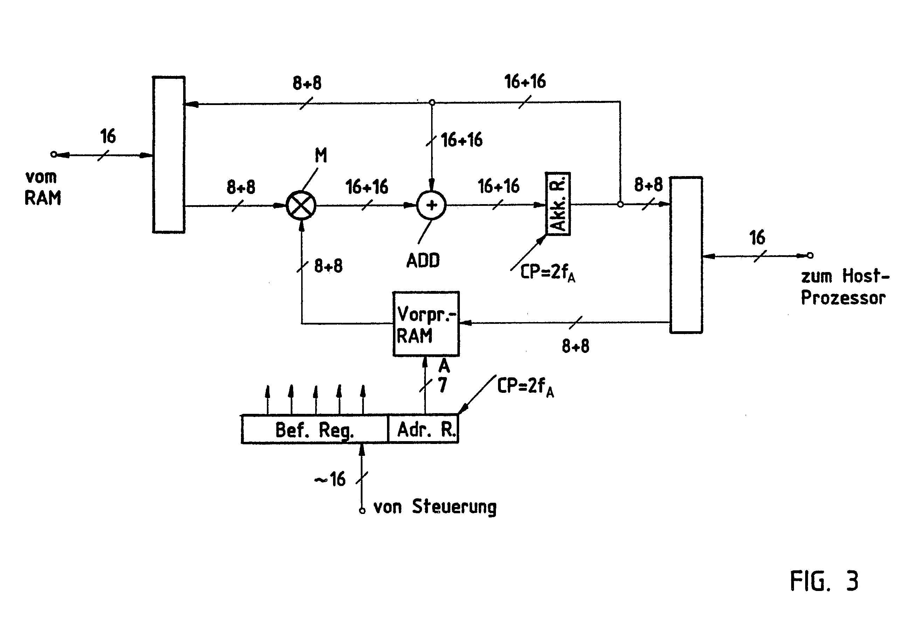

Fig. 3 zeigt den Vorprozessor im Detail. Er besteht im wesentlichen aus einem Multiplizierer M mit nachfolgender Akkumulationsschleife (ADD und Akk.R.), dem Vorprozessor-RAM mit zugehörigem Adressregister (Adr.R.) und einem Befehlsregister (Bef.Reg.). Dem Multiplizierer M werden Daten aus dem RAM und Referenzsignale aus dem Vorprozessor-RAM zur Verknüpfung zugeführt.

Der Vorprozessor ist ein Pipelineprozessor für die komplexe Korrelation. Pro Taktimpuls nimmt er ein neues komplexes Datum aus dem RAM auf und führt eine komplexe Multiplikation und eine komplexe Akkumulation durch. Das entsprechende Referenzsignal für die Korrelation wurde vorher vom Host-Prozessor in das Vorprozessor-RAM geladen. Das zum Vorprozessor-RAM gehörige Adressregister ist als Zähler ausgebildet, so dass es den Adressbereich während einer Korrelation ohne externe Beaufschlagung durchlaufen kann.

Die Funktionen des Empfangskorrelators sind Synchronisation und Korrelation. In der Synchronisationsphase wird der Frequenzfehler der Sender- und Empfängerquarze eliminiert.

Pro Rahmen führt der Empfangskorrelator nacheinander folgende Operationen durch:

### 1. Bandverschiebung

Die Einseitenbandlage wird wieder hergestellt. Multiplikation des im RAM eingelaufenen Signals s(t) mit dem komplexen Offset-Träger der Frequenz $f_{os} = f_o - f_H = B_6/2$ (vgl. oben):

$$s(t): = s(t) \cdot \exp 2\pi j\, f_{os} t$$
(Signalfluss: RAM → Vorprozessor → RAM)

Der Offset-Träger $f_{os}$ ist in abgetasteter Form im Host-Prozessor gespeichert und wird vor Beginn der Rechenoperation im Vorprozessor-RAM als Zahlenfolge abgelegt. Durch Wahl eines einfachen rationalen Verhältnisses von Offset-Frequenz $f_{os}$ zu Abtastfrequenz $f_A$ erreicht man eine ganze Zahl von Perioden in der gespeicherten Folge, so dass diese unverändert für die anschliessenden Signalblöcke verwendet werden kann.

2. Frequenzkorrektur

Das Signalspektrum in unmittelbarer Umgebung der Trägerfrequenz $f_o$ (der Träger selbst ist unterdrückt) ist in Zweiseitenbandlage vorhanden. Es wird herausgefiltert und quadriert. Dadurch entsteht als kohärente Signalkomponente eine Linie bei $2\Delta f$, wenn $\Delta f$ der Trägerfrequenzfehler ist. Ein blockweise springendes Korrektursignal c mit der Frequenz $\Delta f$ wird im Host berechnet und das Gesamtsignal damit in der Frequenz verschoben. Dann ist die Trägerfrequenz auf Sollage (0 Hz). Um den Host-Prozessor zu entlasten, wird vor der Quadrierung eine Tiefpassfilterung im Vorprozessor durchgeführt:

$$\bar{s}^{(t)} = \sum s(t_i) \text{ blockweises Mittel}$$
(Signalfluss: RAM → Vorprozessor → Host).

Dadurch wird allerdings eine obere Grenze für den maximal zulässigen Frequenzfehler gesetzt.

$$2\pi\Delta f = \frac{1}{2}\frac{d}{dt} \arg \bar{s}^2 \qquad \text{Berechnung im Host}$$

$$c \quad = \exp - 2\pi j\Delta f t_{Block} \qquad \begin{array}{l}\text{Berechnung im Host}\\ \text{(ein Wert pro Block)}\end{array}$$

Das Korrektursignal c wird in das Vorprozessor-RAM geladen und es erfolgt die blockweise Phasenkorrektur:

$$s(t): = s(t) \cdot c \text{ (c ist jeweils über einen Block konstant)}$$
(Signalfluss: RAM → Vorprozessor → RAM)

3. Ermittlung der Kanalstossantwort

Die Kanalstossantwort h(t) wird durch Korrelation der empfangenen Synchronisationspräambel (zeitlicher Ausschnitt aus s(t)) mit der als analytischem Signal gespeicherten zugehörigen Referenz r ermittelt:

$$h(t) = s(t) \,\widehat{\divideontimes}\, r(t)$$
(Signalfluss: RAM → Vorprozessor → Host)

Der Host-Prozessor wählt den relevanten Ausschnitt $\widetilde{h}$, (d.h. den zeitlichen Bereich, in welchem Korrelationsspitzen sich über das Rauschen erheben) daraus aus und speist ihn in das Vorprozessor-RAM.

4. Korrelation mit der Kanalstossantwort

Das frequenzkorrigierte Empfangssignal kann nun mit der Kanalstossantwort korreliert werden:

$$s(t): = s(t) \,\widehat{\divideontimes}\, \widetilde{h}(t)$$
(Signalfluss: RAM → Vorprozessor → RAM)

5. Korrelation mit den Zeichencodes

Die Detektion der gesendeten Zeichenfolge erfolgt durch Korrelation mit den Zeichen-Referenzcodes $c_i(t)$. Als gesendet wird dasjenige Zeichen geschätzt, dessen Referenzcode den maximalen Korrelationswert $Z_{max}$ gegeben hat. Pro Signalblock, entsprechend einer Zeichenbreite, wird gebildet:

$$Z_i = [s(t) \,\widehat{\divideontimes}\, c_i(t)]\, t = t_o$$
(Signalfluss: RAM → Vorprozessor → Host)

Nachricht: $i_{max} = i\,(\text{MAX } Z_i)$ Berechnung im Host-Prozessor. Um den E/A-Verkehr für die Ladung des Vorprozessor-RAM mit den Zeichenreferenzcodes $c_i(t)$ (als analytische Signale) klein zu halten, werden alle Signalblöcke nacheinander zunächst mit der ersten Referenz (i=1) korreliert, dann mit der zweiten und sofort. Die Maximumsuche erfolgt im Host-Prozessor iterativ, so dass nicht alle Korrelationswerte abgespeichert werden müssen, sondern nur einer (der bislang grösste) pro Signalblock.

Der beschriebene Empfangskorrelator kann mit den vier Schaltkreisen gemäss Fig. 2 bei einem Pipeline-Takt von 6 MHz für den Vorprozessor einen Sprachkanal in Realzeit verarbeiten (Zeichenlänge 32 Chip).

**Patentansprüche**

1. Empfänger für ein digitales Zellenfunksystem mit ortsfesten Sende/Empfangsstationen und mit beweglichen Sende/Empfangsstationen, die über Funk im Zeitmultiplex mit Vielfachzugriff mit den ortsfesten Stationen digitale, jeweils durch eine Synchronisationspräambel eingeleitete Nachrichten, die mit einem Satz von orthogonalen Zeichencodes gespreizt sind, austauschen können, wobei mehrere ortsfeste Stationen von einer Leitstelle gesteuert werden, von denen wiederum mehrere mit einer Überleiteinrichtung zu einem Fernsprechnetz verbunden sind gekennzeichnet durch folgende Merkmale:
– der Empfänger weist einen analogen Eingangsteil auf, in welchem empfangene Signale auf eine Zwischenfrequenz von Null abgemischt werden; daran sind nacheinander ein Analog/Digital-Wandler (A/D), ein digitaler Empfangskorrelator und eine Sprachverarbeitung angeschlossen;
– der digitale Empfangskorrelator besteht aus einem RAM-Pufferspeicher, einem fest verdrahteten Vorprozessor, einem speicherprogrammierten Signalprozessor (Host-Prozessor), die alle untereinander durch bidirektionelle Datenbusse verbunden sind, und einer Adresssteuerung.

2. Empfänger nach Anspruch 1, dadurch gekennzeichnet, dass er im analogen Eingangsteil als Quadraturempfänger für den Empfang eines Restseitenband-modulierten Signals und im digitalen Teil zur Verarbeitung komplexer digitaler Daten ausgelegt ist.

3. Empfänger nach Anspruch 1, gekennzeichnet durch folgenden Aufbau des Vorprozessors:
- an einen Multiplizierer (M) schliesst sich eine Akkumulationsschleife mit einem Addierer (ADD) und einem Akkumulationsregister (Akk.R.) an;
- dem Multiplizierer (M) werden zum einen Daten aus dem RAM-Pufferspeicher (RAM) zugeführt, zum anderen Referenzsignale aus einem Vorprozessor-RAM (Vorpr.-RAM), welches vom Host-Prozessor geladen wird;
- ein Befehlsregister (Bef.Reg.) und ein dem Vorprozessor-RAM (Vorpr.-RAM) zugeordnetes Adressregister (Adr.R.) sind von der Adresssteuerung angesteuert;
- der Ausgang des Akkumulationsregisters (Akk.R.) ist jeweils an den bidirektionellen Datenbus zum RAM-Pufferspeicher und zum Host-Prozessor angeschlossen.

4. Empfänger nach Anspruch 3, dadurch gekennzeichnet, dass das Adressregister (Adr.R.) als Zähler ausgebildet ist.

5. Empfänger nach Anspruch 3, dadurch gekennzeichnet, dass alle benötigten Referenzsignale wie Synchronisationspräambeln, Zeichencodes usw. im Host-Prozessor fest abgespeichert sind und zu Beginn einer entsprechenden Korrelationsberechnung in das Vorprozessor-RAM (Vorpr.-RAM) geladen werden.

6. Empfangsverfahren (bzw. Demodulationsverfahren) für einen Empfänger nach einem der Ansprüche 1 bis 5, dadurch gekennzeichnet, dass
- in einem ersten Schritt im Vorprozessor das im RAM-Pufferspeicher eingelaufene und mit einem Hilfsträger bereits abgemischte Empfangssignal s(t) durch Multiplikation mit einem Offset-Träger wieder in Einseitenbandlage gebracht wird und anschliessend in den RAM zurückgeladen wird;

- in einem zweiten Schritt im Host-Prozessor durch Rückgewinnung des Trägers mittels Quadrierung ein Frequenzkorrektursignal gewonnen wird, das Signal s(t) im Vorprozessor mit dem Frequenzkorrektursignal verschoben und in den RAM-Pufferspeicher zurückgeladen wird;

- in einem dritten Schritt im Vorprozessor die Kanalstossantwort $\tilde{h}$ (t) durch Korrelation der empfangenen Synchronisationspräambel mit der zugehörigen gespeicherten Referenz ermittelt wird, im Host-Prozessor daraus der zeitlich relevante Ausschnitt $\tilde{h}$ (t) ausgewählt und in das Vorprozessor-RAM geladen wird;

- in einem vierten Schritt im Vorprozessor das frequenzkorrigierte Signal s(t) mit der Kanalstossantwort $\tilde{h}$ (t) korreliert und in den RAM-Pufferspeicher zurückgeladen wird;
- in einem fünften Schritt im Vorprozessor das Signal s(t) mit den gespeicherten Zeichen-Referenzcodes korreliert und im Host-Prozessor bewertet wird.

7. Empfangsverfahren (bzw. Demodulationsverfahren) nach Anspruch 6, dadurch gekennzeichnet, dass alle Blöcke des Signals s(t) nacheinander zunächst mit dem ersten Zeichen-Referenzcode korreliert werden, dann mit dem zweiten usw..

8. Empfangsverfahren (bzw. Demodulationsverfahren) nach Anspruch 7, dadurch gekennzeichnet, dass die Maximumsuche im Host-Prozessor iterativ erfolgt, so dass jeweils nur der bislang grösste Korrelationswert eines Signalblocks abgespeichert wird.

**Claims**

1. Receiver for a digital cellular radio system with locally fixed transmitter-receiver stations and mobile transmitter-receiver stations, which can exchange digital communications, which are each preceded by a synchronisation preamble and spread by a set of orthogonal symbol codes, with the locally fixed stations by radio in time multiplex with multiple access, wherein several locally fixed stations are controlled from a master station, of which in turn several are connected by a transfer equipment with a telephone network, characterised by the following features:
- the receiver displays an analog input part, in which received signals are translated from zero to an intermediate frequency and to which are connected an analog-to-digital converter (A/D), a digital receiving correlator and a speech processing unit one behind the other and
- the digital receiving correlator consists of a RAM buffer store, a fixedly wired preliminary processor, a storage-programmed signal processor (host processor), which are all connected one among the other by bidirectional data busses, and an address control.

2. Receiver according to claim 1, characterised thereby, that it is designed in the analog input part as quadrature receiver for a signal modulated in vestigial sideband and in the digital part for the processing of complex digital data.

3. Receiver according to claim 1, characterised by the following build-up of the preliminary processor:
-a multiplier (M) is followed by an accumulation loop with an adder (ADD) and an accumulation register (Akk.R.),
- conducted to the multiplier (M) are on the one hand data from the RAM buffer store (RAM) and on the other hand reference signals from a preliminary processor RAM (Vorpr.-RAM), which is loaded by the host processor,
- a command register (Bef.Reg.) and an address register (Adr.R.) associated with the preliminary processor RAM (Vorpr.-RAM) are driven by the address control and

– the output of the accumulation register (Akk.R) is connected to the respective data bus to the RAM buffer store and to the host processor.

4. Receiver according to claim 3, characterised thereby, that the address register (Adr.R) is constructed as counter.

5. Receiver according to claim 3, characterised thereby, that all needed reference signals such as synchronisation preambles, symbol codes and so forth are fixedly stored in the host processor and at the beginning of a corresponding correlation computation loaded into the preliminary processor RAM (Vorpr.-RAM).

6. Reception method (or demodulation method) for a receiver according to one of the claims 1 to 5, characterised thereby, that
– in a first step in the preliminary processor, the reception signal s(t), which has run into the RAM buffer store and already been translated by an auxiliary carrier, is brought back again into single sideband position through multiplication by an offset carrier and subsequently loated back again into the RAM,
– in a second step in the host processor, a frequency correction signal is obtained through recovery of the carrier by means of squaring, the signal s(t) in the preliminary processor is shifted by the frequency correction signal and loaded back again into the RAM buffer store,
– in a third step in the preliminary processor, the channel surge response h(t) is determined through correlation of the received synchronisation preamble with the associated reference, the section $\tilde{h}$ (t) relevant in time is selected therefrom in the host processor and loaded into the preliminary processor RAM,
– in a fourth step in the preliminary processor, the signal s(t) corrected in frequency is correlated with the channel surge response $\tilde{h}$ (t) and loaded back again into the RAM buffer store, and
– in a fifth step in the preliminary processor, the signal s(t) is correlated with the stored symbol reference code and weighted in the host processor.

7. Reception method (or demodulation method) according to claim 6, characterised thereby, that all blocks of the signal s(t) are correlated one after the other initially with the first symbol reference code, then with the second and so forth.

8. Reception method (or demodulation method) according to claim 7, characterised thereby, that the maximum search in the host processor takes place iteratively so that each time only the hitherto greatest correlation value of a signal block is stored.

## Revendications

1. Récepteur pour un système numérique de radio cellulaire comprenant des stations d'émission/réception fixes et des stations d'émission/réception mobiles pouvant échanger avec les stations fixes, par radio en multiplexage temporel et avec accès multiples, des messages numériques, introduits chacun par préambule de synchronisation et dilatés par un jeu de codes de caractères orthogonaux, plusieurs stations fixes étant commandées par un poste de contrôle dont plusieurs sont réunis en un réseau téléphonique avec un dispositif de transfert, ledit récepteur étant caractérisé en ce que:
– le récepteur comporte une partie d'entrée analogique dans laquelle les signaux reçus sont abaissés à une fréquence intermédiaire nulle; cette partie est reliée successivement à un convertisseur analogique/numérique (A/n), un corrélateur de réception numérique et un traitement de la parole;
– le corrélateur de réception numérique est constitué par une mémoire tampon RAM, un préprocesseur câblé, un processeur de signal programmé (processeur hôte), qui sont reliés entre eux par des bus de données bidirectionnels, et une commande d'adresse.

2. Récepteur selon revendication 1, caractérisé en ce que la partie d'entrée analogique est réalisée sous forme d'un récepteur en quadrature pour la réception d'un signal modulé à bande latérale résiduelle et la partie numérique est réalisée pour le traitement de données numériques complexes.

3. Récepteur selon revendication 1, caractérisé par la constitution suivante du préprocesseur:
– un multiplicateur (M) est relié à une boucle d'accumulation comprenant un additionneur (ADD) et un registre d'accumulation (RAC);
– le multiplicateur (M) reçoit d'une part des données de la mémoire tampon RAM (RAM) et d'autre part des signaux de référence d'une RAM du préprocesseur, qui est chargée par le processeur hôte;
– un registre d'instruction (RI) et un registre d'adresse (RAD) affecté à la RAM du préprocesseur sont attaqués par la commande d'adresse;
– la sortie du registre d'accumulation (RAC) est reliée au bus de données bidirectionnel aboutissant à la mémoire tampon RAM et au processeur hôte.

4. Récepteur selon revendication 3, caractérisé en ce que le registre d'adresse (RAD) est réalisé sous forme de compteur.

5. Récepteur selon revendication 3, caractérisé en ce que tous les signaux de référence nécessaires, tels que préambules de synchronisation, codes de caractères, etc., sont mémorisés dans le processeur hôte et chargés dans la RAM du préprocesseur au début d'un calcul de corrélation.

6. Procédé de réception (ou de démodulation) pour un récepteur selon une quelconque des revendications 1 à 5, caractérisé en ce que:
– au cours d'une première phase dans le préprocesseur, le signal de réception s(t) entré dans la mémoire tampon RAM et déjà abaissé par mélange avec une porteuse auxiliaire est ramené dans la position de bande latérale unique par multiplication par une porteuse de décalage, puis rechargé dans la RAM;

– au cours d'une deuxième phase dans le processeur hôte, un signal de correction de fréquence est produit par récupération de la porteuse à l'aide d'une élévation au carré et le signal s(t) est décalé dans le préprocesseur par le signal de correction de fréquence puis rechargé dans la mémoire tampon (RAM);

– au cours d'une troisième phase dans le préprocesseur, la réponse impulsionnelle de voie h(t) est déterminée par corrélation du préambule de synchronisation reçu avec la référence mémorisée correspondante, et l'intervalle temporel pertinent h(t) est sélecté dans cette réponse par le processeur hôte puis chargé dans la RAM du préprocesseur;

– au cours d'une quatrième phase dans le préprocesseur, le signal corrigé en fréquence s(t) est corrélé avec la réponse impulsionnelle de voie h(t) puis rechargé dans la mémoire tampon RAM;

– au cours d'une cinquième phase dans le préprocesseur, le signal s(t) est corrélé avec les codes de référence de caractères mémorisés puis évalué dans le processeur hôte.

7. Procédé de réception (ou de démodulation) selon revendication 6, caractérisé en ce que tous les blocs du signal s(t) sont corrélés successivement d'abord avec le premier code de référence de caractère, puis le second, etc.

8. Procédé de réception (ou de démodulation) selon revendication 7, caractérisé en ce que la recherche du maximum dans le processeur hôte est itérative, de sorte que seule la valeur de corrélation maximale jusqu'alors d'un bloc de signal est mémorisée.

$f_A \approx B_6$

komplexe Abtastwerte

FIG. 1

FIG. 2

FIG. 3